(19) **Europäisches Patentamt / European Patent Office / Office européen des brevets**

(11) **EP 1 889 659 B1**

(12) # EUROPEAN PATENT SPECIFICATION

(45) Date of publication and mention of the grant of the patent:
**13.03.2013 Bulletin 2013/11**

(51) Int Cl.:
**B01J 19/00** (2006.01)　　**B01J 19/18** (2006.01)
**B01J 19/24** (2006.01)

(21) Application number: **06254321.0**

(22) Date of filing: **17.08.2006**

(54) **Convertible batch/continuous reactor and use of the same**

Reaktor für stapelweisen oder kontinuierlichen Betrieb und dessen Verwendung

Réacteur convertible pour application en mode batch ou continu et son utilisation

(84) Designated Contracting States:
**DE FR IT**

(43) Date of publication of application:
**20.02.2008 Bulletin 2008/08**

(73) Proprietor: **Petróleo Brasileiro S.A. - PETROBRAS**
**Rio de Janeiro, RJ 20035-900 (BR)**

(72) Inventor: **Vidal Viera, José Antônio**
**Barra da Tijuca, Rio de Janeiro, RJ (BR)**

(74) Representative: **Roberts, Mark Peter**
**J A Kemp**
**14 South Square**
**Gray's Inn**
**London WC1R 5JJ (GB)**

(56) References cited:
**WO-A-2005/028097　　DE-A1-102004 003 925**
**US-A- 6 080 373**

**Description**

The present invention concerns the field of reactors for monophase or multiphase reactions with, in addition, separation of phases within the reactor. More specifically, the invention concerns reactors for reactions whose reagents are distributed in two or more phases as the products are formed, with a tendency towards loss of contact between the reagents and consequent interruption of the reaction, it being desirable to promote, throughout the reaction, the separation of the phases but maintaining the contact between them. The reactor model according to the invention can also be applied to reactions with biphase, triphase or even multi-phase separation within the same concept.

Research and development work on new processes usually takes place in different phases, in which the process is tested on increasing scales, from the laboratory to the industrial plant. This sequence normally starts with batch operations and ends with the implementation of a continuous circuit.

On the laboratory scale it is common to use batch reactors; on the pilot scale both batch and continuous reactors are used. Larger plants (demonstration, prototype, semi-industrial), for their part, must already have the final process configuration in order to be scaled up and, therefore, when the objective to be reached is a continuous process, the unit must already have this form.

Research started in a batch reactor, at some point during development, has to make the transition to a continuous process. The larger the scale to which this transition is made, the greater will be the losses in the event of failure.

According to this line of reasoning, it can be concluded that in order to minimise the transition risks, the ideal situation would be to construct the test plant as a batch system, retaining the parameters that have already been mastered in the previous steps, take from this all the knowledge necessary for conversion to the continuous process and perform the conversion of this same plant, at the least cost and with the greatest possible margin for success.

Accordingly, the method also requires a reactor that is suitable for monophase or multi-phase reactions with, in addition, separation of phases within the reactor and, more specifically, a reactor for reactions in which some of the reagents are extracted from the reaction medium by one or more (product) phases formed in the reaction, the reactor being provided with a geometry and dimensions such that it is able to operate both in batch mode and in continuous tubular mode by replacement of internal elements and suitable location of nozzle attachments, such a reactor being described and claimed in the present application.

In the prior art, US 6,080,373 discloses apparatus of continuous mode operation in which catalyst particles are contacted with a liquid and a gas in a vertically extending cylindrical vessel. The particles and liquid are placed in the vessel into which the gas and liquid are continuously fed from the bottom thereof so that an upwardly flowing mixture comprising the particles, liquid and gas is formed. The gas and liquid are continuously withdrawn from a separating zone at the top of the vessel, while the catalyst particles-rich phase is continuously recycled to the bottom of the vessel by gravity.

According to the present invention there is provided a reactor according to the appended independent claim 1.

In one embodiment, there is provided a reactor with a geometry and dimensions that are suitable for performing monophase or multiphase reactions with, in addition, separation of phases within the reactor and, more specifically, reactors for reactions in which some of the reagents are extracted from the reaction medium by one or more (product) phases formed in the reaction, both in batch (mixture reactor) and continuous tubular type form, and where from the geometrical point of view, in the continuous tubular type operating mode, the reactor comprises:

(a) a mixture volume, section (1), arranged internally, at the charge inlet, or externally, as an independent mixer;
(b) a straight vertical part, descending or ascending, section (2);
(c) a straight vertical part, section (3), with flow of the reaction medium that is inverted in relation to section (2), sections (2) and (3) being separated by a dividing deflector (218/218');
(d) a separation control volume, section (4), adjoining the transition between sections (2) and (3), where the interface is formed between the separated phases;

in such a way that this geometry involves:

(i) at the end of one vertical part, section (2), and at the start of the other vertical part, section (3), a large concentration of drops of the separated phase, which is beneficial for maximisation of the conversion, due to the greater contact between the two phases;
(ii) as the separation takes place along section (3) the drops return to the opposite end of the reactor, in the direction of section (4), from where they are removed, increasing the concentration of drops in the transition between the straight vertical parts.

Optionally, the reactor can be coupled, by the end at which the separated phase discharges following the coalescence of the drops, to a collector provided with a viewer, section (5).

During the batch operation, this collector (5) adds dwell time for completion of the separation and avoids accumulation of the coalesced phase within the reactor, as well as, for some applications, the formation of deposits which are difficult to remove on the walls of the reactor.

Thus the invention provides a convertible batch/continuous reactor, with a geometry and dimensions that make it suitable for both batch (mixture reactor) and continuous tubular type operations.

The invention also provides a convertible batch/continuous reactor that can be applied especially to reactions where one of the reagents has a tendency to be absorbed by an insoluble (product) phase in the reaction medium, which is detrimental to the final conversion.

The invention also provides a convertible batch/continuous reactor that is particularly useful for transesterification reactions of vegetable oils with alcohols, in which the configuration of the reaction allows the coalescence and decantation of the dense phase, maintaining the contact between catalyst-rich drops and the reaction medium.

## BRIEF DESCRIPTION OF THE DRAWINGS

To allow better understanding, an embodiment of the present invention will now be described by way of non-limitive example with reference to the accompanying drawings. In the drawings:

FIGURE 1 attached illustrates a reactor according to the invention, operating in continuous mode, in an application in which the separated drops are comprised of dense phase formed during the reaction.

FIGURE 2A attached illustrates a reactor configuration for batch operation, coupled to a collection vessel. FIGURE 2B attached illustrates the configuration of the same reactor according to the invention, following conversion for continuous operation.

FIGURE 3A attached illustrates a reactor identical to that shown in Figure 2A. FIGURE 3B attached illustrates a variant of the reactor for continuous operation, in which the vertical deflector which defines the ascending/descending flows is configured with a tubular geometry.

FIGURES 4A and 4B attached illustrate variants of the reactors in Figures 3A and 3B, in which the reactors are configured with an outer jacket, for heat exchange, and the mixture section of the reactor 4B has an internal coil, to add to the heat exchange area.

FIGURES 5A and 5B attached illustrate variants of the reactors in Figures 4A and 4B, in which the heat exchange jackets of the reactors have been replaced by a coil.

FIGURE 6A attached illustrates the same reactor in Figure 3A. FIGURE 6B attached illustrates a variant of the reactor for continuous operation in Figure 3B, where the mixture section has been removed from the inside of the reactor (for applications in which the charge arrives ready mixed or where there is an external mixer).

FIGURE 7 attached illustrates a variant of the reactor for continuous operation in Figure 3B, where the separated phase is lighter and is therefore collected at top of the reactor. In this situation the flows are inverted.

FIGURE 8 attached illustrates a further variation of the reactor according to the invention, for operation directly in continuous mode, without worrying about the batch/continuous conversion.

FIGURE 9 attached illustrates a variant of the reactor for continuous operation in Figure 3B, for application in reactions with outgoing flows distributed in four phases: one gas phase, two liquid phases and one solid phase.

## DETAILED DESCRIPTION OF PREFERRED EMBODIMENTS

The present invention is, therefore, aimed at a reactor design with the flexibility to operate both in batch and continuous mode, with particular application to reactors where one of the reagents has the tendency to be absorbed by an insoluble (product) phase in the reaction medium, to the detriment of the final conversion.

The invention concerns the geometrical and dimensional design of a reactor capable of operating both in batch (mixture reactor) and continuous (descending/ascending or ascending/descending tubular with simultaneous decantation) mode, through replacement of internal elements and suitable location of nozzle attachments.

The proposed reactor, generally designated by the number (200), comprises a vessel with a length to diameter (L/D) ratio that is close to the upper limit of the design criterion of the reactor in batch mode, plus a clearance of between 1 and 300% in length, this clearance being intended to provide extra volume or security during batch operation and, at the same time, to provide a dimensional reserve for subsequent operation in continuous tubular mode.

The degrees of freedom in the dimensioning of the reactor for batch operation are directed towards accommodating the continuous tubular operating mode, with or without separation of phases.

This configuration is particularly useful in reactions whose reagents are distributed in two liquid phases as the products are formed, with a tendency for there to be a loss of contact between the reagents and a consequent interruption of the reaction, with it being useful to promote the separation of the two phases (in order, for example, to avoid the formation of a solid emulsion), but maintaining contact between them.

Note that, even though it is frequently stated that the present reactor is basically useful for reaction with the formation of two phases, the model proposed in the invention can equally be applied to reactions with multiphase or simply monophase separation.

The reaction between castor oil and a low molecular weight alcohol in the presence of strong bases is a good illustration of this type of situation. The glycerine produced, upon decantation, removes the catalyst from the reaction medium and, if maintained in suspension by means of mechanical agitation, can form an emulsion. In cases like this, the reaction configuration proposed allows the coalescence and decantation of the dense phase, maintaining contact between the catalyst-rich drops and the reaction medium.

The invention will be described by way of non-limitive example with reference to the attached figures.

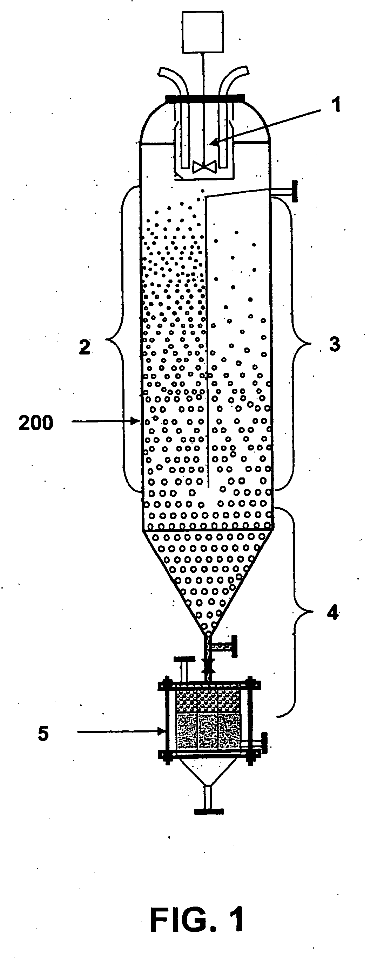

Figure 1 illustrates a generic reactor (200) according to the invention.

In a reaction such as that which occurs between castor oil and a low molecular weight alcohol, in the presence of strong bases, the separation process in the reactor (200) according to the invention takes place throughout the reaction, in the same direction of the flow within section (2) and in the counter direction in section (3), with the formation of an interface within the lower collector, section (5) or even in section (4), depending on the control configuration.

Also according to Figure 1, a reactor designed with such a geometry has the following characteristics, in terms of task or operation of each section, shown by the numbers (1) to (5):

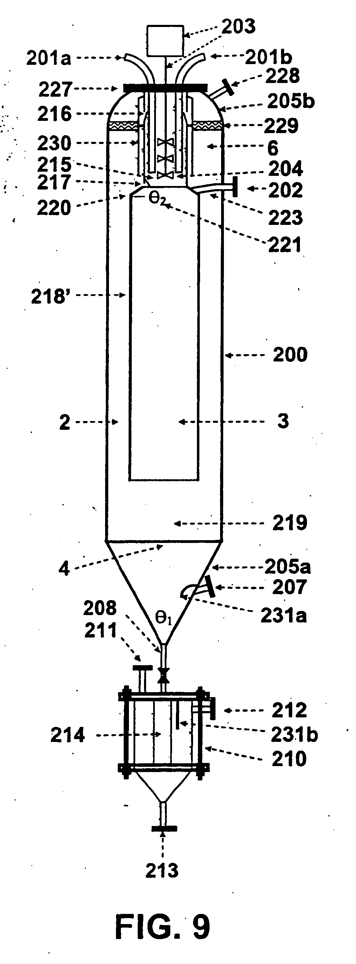

1 - a mixture volume - section (1) - arranged internally, at the charge inlet, or externally, as an independent mixer;
2 - a straight vertical part, descending (when the separated phase is the dense one) or ascending (when the separate phase is the light one) - section (2);
3 - a straight vertical part - section (3) - with the flow of the reaction medium inverted in relation to section (2), sections (2) and (3) being separated by a dividing deflector;
4 - a separation control volume - section (4) - below or above sections (2) and (3), where the interface between the separated phases is formed;
5 - between the end of one vertical part - section (2) - and the start of the other vertical part - section (3) - there is a high concentration of drops of the separated phase, which is beneficial for maximisation of the conversion, due to the greater contact between the two phases;
6 - the separation is completed along section (3) and the drops return to the opposite end of the reactor, in the direction of section (4), from where they are removed, increasing the concentration of drops in the transition between the straight vertical parts, sections (2) and (3);
7 - optionally, the reactor can be coupled, by the end at which the separated phase discharges, to a collector provided with a viewer - section (5);
8 - for reactions involving a gas phase, the reactor (200) can be designed with an additional section (6) (see Figure 9) for gas-liquid separation.

Generally the operation of the reactor according to the invention involves placing the charges and the catalyst in the mixture volume (1), bringing about the mixing and starting the reaction through agitation, and directing the flow to sections (2) and (3), with the aim of completing the reaction time under conditions that are close to those of a plug flow type reactor.

If no more than one phase is formed, the products leave via the nozzle (202) installed at the end of the section (3).

Where more than one liquid phase is formed, one of these coalesces, separating from the continuous phase as it flows through section (2) and continues at high speed as far as the transition to section (3). At that point the large drops accumulate in the adjoining section (4) seeking the interface between the two phases and from there continue to the discharge nozzle (207) of the separated phase. The smaller drops are drawn by the continuous phase flow as far as section (3) where the reaction and the coalescence mechanism finish. The increase in size of these drops means that the resultant of the weight and the thrust exceeds the drawing force and the coalesced drops return in the counter direction as far as section (4) where they are absorbed by the interface, following the flow of the separated phase. The continuous phase, for its part, continues as far as the end of section (3), discharging via the nozzle (202) positioned at the end of this section.

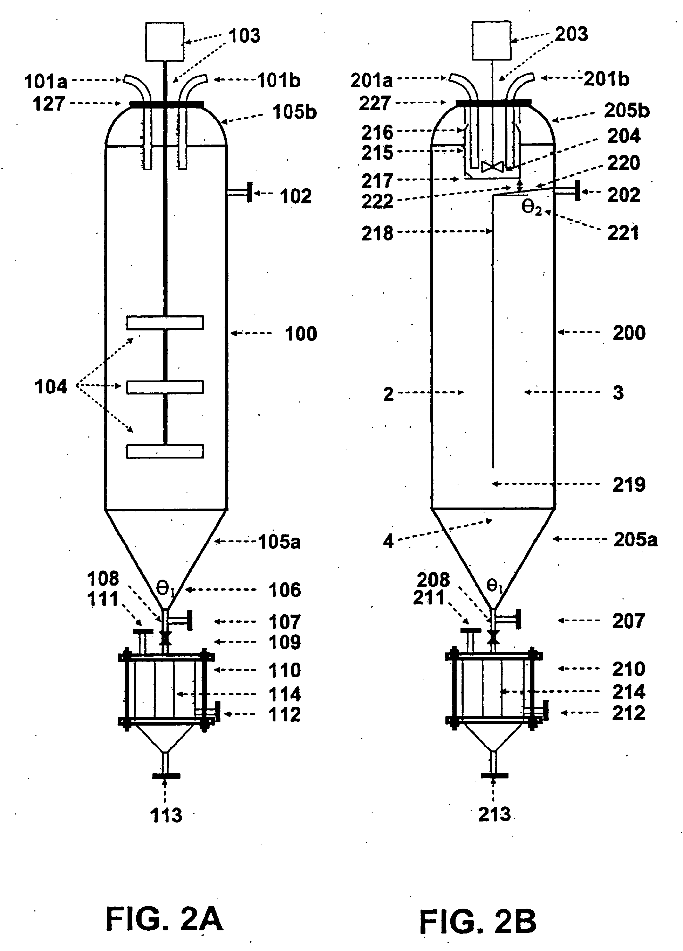

During the batch operation, and referring to Figure 2A, following interruption of the agitation for decantation of the dense phase, the collector (5) is aligned with the reactor, by opening the interconnecting valve (109). This operation avoids the accumulation of the phase being separated within the reactor, since this goes on to 'decant' directly into the collector vessel (5), reducing contamination from adherence to the walls.

In the continuous operation use of the collector vessel (5) can be maintained, or not, according to a study of the most appropriate alternative in each case.

The process of alkylation, the production of greases and the production of esters from castor oil or any other vegetable oils and/or animal fats, are examples of reactions where the reactor according to the invention is useful, although the application of the latter is not limited to just these processes.

In the figures that follow, the notation A always refers to the batch reactor, while the notation B always refers to the continuous reactor.

Figure 2A is, therefore, a schematic representation of a mixture reactor (100) intended for batch operation and Figure 2B, reactor (200), is the equivalent following conversion to continuous operation mode.

According to the illustrated embodiment, the main body of the mixture reactor (100) preferably has a cylindrical form (without this excluding other geometries, such as a straight prism, cone, etc.) with a conical bottom (without this excluding any other type of bottom, such as ellipsoidal, torispherical, etc.), and where the upper end is provided with a sufficient number of charge inlet nozzles (101 a/b) and nozzle attachment(s) (102) for the future discharge of the product (following conversion to continuous operation mode) and a mechanical agitator (103) provided with blades (104) that are dimensioned for the desired task, according to normal agitator design criteria. The bottom (105a) of the reactor (100), in the configuration described, has a conical form, without this excluding other possibilities, such as ellipsoidal, torispherical, straight cover, etc. If conical, the angle $\theta_1$ (106) of the cone may preferably vary within a range of $10° < \theta_1 < 180°$, with $30° < \theta_1 < 90°$ being preferred.

In the bottom of the reactor (100), preferably in the bottom end of the conical cover (105a), or higher up, a discharge nozzle (107) is arranged. Preferably, therefore, the dense phase discharge is performed into a collector vessel (110), connected to the cone (105a) via a duct (108) of minimum length or directly, by means of nozzle-nozzle connections. Between the collector (110) and the reactor bottom (100) a shut-off valve (109) prevents the passage of charge during the agitation phase.

The collector (110) is provided with vent (111) and charge discharge (112, 113) nozzles and its body is comprised of transparent material or it has viewers (114) of a suitable quantity and size for observing the separation process and the interface. The capacity of the collector (110) must preferably be sufficient to receive all the dense phase separated during the batch operation.

The dimensioning of the reactor (100) for batch mode operation, in addition to the variables normally considered for this type of operation (useful volume, total volume, diameter, length, etc.), may also consider the design criteria for the continuous operation mode (200), in anticipation of the future conversion.

In this way, for example, the diameter of the reactor (100, 200) simultaneously satisfies the two equations below, formulated on the basis of parameters for the continuous operation mode design:

$$D \geq 2\sqrt{((\text{area of section 2} + \text{area of section 3})/ \pi)}$$

$$D \geq 2\sqrt{(Q_{fsep}/V_{gfc}\pi)}$$

where:

$Q_{fsep}$ = volumetric flow of the phase formed following coalescence of the drops separated from the reaction medium. In the case of the reactor of Figure 2B, $Q_{fsep}$ is the flow of the dense phase separated from the reaction medium.

$V_{gfc}$ = speed of detachment of the drops from the portion of continuous phase retained within the phase formed following coalescence of the drops separated from the reaction medium, calculated for a continuous phase drop diameter above the value set as the design criterion for each type of application.

In the case of the reactor in Figure 2B, $V_{gfc}$ is the speed of separation of the light phase drops retained within the dense phase.

Preferably $V_{gfc}$ should be less than 0.25 m/min.

Optionally, $V_{gfc}$ can be calculated by the expression:

$$V_{gfc} = \frac{g \cdot D^2_g \cdot (\rho_g - \rho_{fsep})}{18 \cdot \mu_{fsep}}$$

restricted to situations where Re < 0.1
with:

$$Re = \frac{D_g \cdot \rho \cdot V_g}{\mu}$$

$\rho_g$ = density of drops
$D_g$ = minimum diameter of the drops to be detached, as established by the design criterion relevant to each type of application
$\rho_{fsep}$ = density of the phase separated (dense)
$\mu_{fsep}$ = viscosity of the phase separated (dense)

For conversion in the tubular type reactor, generally designated by the number (200), intended for continuous operation, as shown in Figure 2B, the shaft (103) and the blades (104) of the agitator of the reactor (100) are replaced by a smaller assembly (203, 204), compatible with the reagent mixing task.

Mixing of the reagents takes place in an internal vessel (215), dimensioned to provide the dwell time necessary at the agitation stage. The discharge of the mixture from this vessel (215) is performed by means of openings (216) or any other system suitable for the task. The bottom of the vessel (215) must have drainage holes (217), with a maximum diameter of, for example, 10 mm, protected by shields arranged in such a way as to prevent the agitation causing the discharge of the mixture after too little dwell time.

At the same time, the reactor (200) has a flat dividing deflector (218), which vertically divides the flow into two sections, as shown in Figures 1 and 2B, sections (2) and (3). The charges continue to enter via the same nozzles used in the batch operation mode (101a/201a and 101b/201b), but the discharge of the light phase is performed via the nozzle (102/202), which is unused in the batch operation. This nozzle (102/202) is arranged at the greatest possible height, within section (3).

Note that the outflow in continuous operation mode must be compatible with the design criteria in continuous mode and the dimensions set for batch operation. In this way, the dwell time and the speeds, among other parameters for continuous operation, are considered when dimensioning the equipment for batch operation.

Dimensioning of the dividing deflector (218) takes into account:

a) speed in section (2) that is ten times lower than the value of the speed of detachment of the dense phase drops with a diameter equal to the minimum specified for each type of application (reaction), this speed preferably being less than 0.5 m/min. Optionally, the speed of detachment of the drops can be calculated by the expression:

$$V_g = \frac{g \cdot D^2_g (\rho_g - \rho)}{18 \cdot \mu}$$

restricted to situations where Re < 0.1
with

$$Re = \frac{D_g \cdot p \cdot V_g}{\mu}$$

$p_g$ = density of the drops

$D_g$ = minimum diameter of the drops to be detached, as established by the design criterion relevant to each type of application

$p$ = density of continuous phase

$\mu$ = viscosity of continuous phase

$V_g$ = speed of detachment of drops

b) speed in section (3) lower than speed of detachment of the dense phase drops with diameter equal to the minimum specified for each type of application (reaction), this speed preferably being less than 0.25 m/min. Optionally, the speed of detachment of the drops can be calculated using the same expression presented in item a) above;

c) total dwell time in sections (1), (2) and (3) equal to or greater than the time necessary for the reaction to achieve the degree of conversion specified for each type of application;

d) passage area (219) between sections (2) and (3) preferably in the range between 20% and 200% of the average area of the two sections. Depending on the position defined for the liquid-liquid interface, the passage area between sections (2) and (3) can extend into the cover (205a) or not;

e) plate (220) for sealing the top of section (3) with a slope angle of $\theta_2$ to the horizontal (221) preferably of between 1° and 60°, in the direction of the centre line of the reactor (200). If there is space to position the mixture vessel in the side of section (2), between the flat deflector (218) and the sidewall of the reactor, the deflector (218) can be extended as far as the top cover (205b) of the reactor (200) (depending on the type of cover), thereby dispensing with the sealing plate (220);

f) minimum vertical spacing (222) between the sealing plate (220) of section (3) and the base of the mixture vessel (215) equal to approximately 5 mm and, preferably, in the range between 25 and 250 mm.

Selecting a flat dividing deflector (218) is particularly appropriate for reactors with diameters in excess of 1.2 m as this facilitates assembly/disassembly even with the reactor already installed in the vertical position.

The dense phase discharge can be performed via the nozzle arranged in the bottom of the section (4) (107/207), or via the discharge nozzles (112/212, 113/213) of the same collector (110/210) used in batch operation. If the collector of section (5) is not used, the dense phase - light phase interface control is located within the reactor, close to the bottom (section 4). If, optionally, the collector is used, the interface can be located within the collector (110/210). In this case the vent nozzle (111/211) may be blocked.

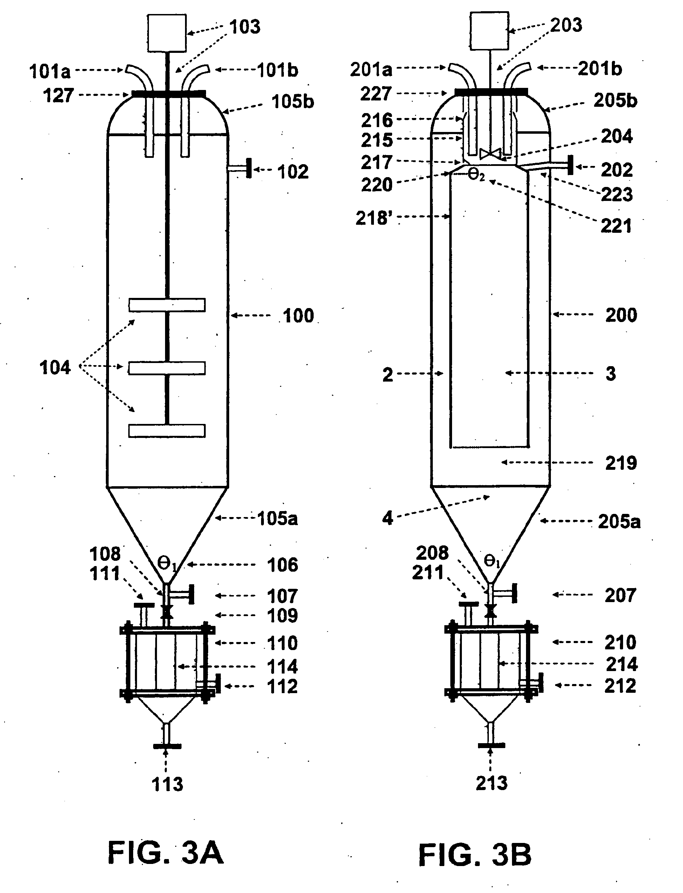

Figure 3A and Figure 3B show a variant of the reactor presented in Figure 2A and 2B, in which the dividing deflector (218) which defines the ascending/descending flows is replaced by a tube (218') open at its bottom end and sealed at its top end, installed below the mixture section, preferably immediately below the mixture vessel (215). This tube (218') has the same function as the dividing deflector of Figure 2B (218), vertically dividing the flow into two sections, one external and annular (2), and the other internal and tubular (3).

The charges continue to enter via the same nozzles used in batch operation mode (101 a/201 a and 101 b/201 b), but discharge of the light phase is performed via the nozzle (102/202), which is unused in batch operation.

The dimensioning of the tubular dividing deflector (218') provides for:

a) speed in section (2) that is ten times lower than value of the speed of detachment of the dense phase drops with a diameter equal to the minimum specified for each type of application (reaction), this speed preferably being less than 0.5 m/min. Optionally, the speed of detachment of the drops can be calculated by the expression:

$$V_g = \frac{g \cdot D^2_g \,(p_g - p)}{18 \cdot \mu}$$

restricted to situations where Re < 0.1
with

$$Re = \frac{D_g \cdot p \cdot V_g}{\mu}$$

$p_g$ = density of the drops
$D_g$ = minimum diameter of the drops to be detached, as established by the design criterion relevant to each type of application
$p$ = density of continuous phase
$\mu$ = viscosity of continuous phase
$V_g$ = speed of detachment of drops

b) speed in section (3) lower than speed of detachment of the dense phase drops with diameter equal to the minimum specified for each type of application (reaction), this speed preferably being less than 0.25 m/min. Optionally, the speed of detachment of the drops can be calculated using the same expression presented in item a) above;

c) total dwell time in sections (1), (2) and (3) equal to or greater than the time necessary for the reaction to achieve the degree of conversion specified for each type of application;

d) passage area between sections (2) and (3) preferably in the range between 20% and 200% of the average area of the two sections;

e) sealing of the top of the tube (218') constituting the dividing deflector, preferably with a plate (220) in the form of a cone trunk, connecting the walls of the tube (218') with the bottom of the mixture vessel (215). The angle $\theta_2$ between the cone trunk and the horizontal (221) can be between 0° and 90°;

f) if the seal at the top of the tube (218') that constitutes the dividing deflector is not integral with the bottom of the mixture vessel (215), the minimum vertical spacing between the sealing plate of section (3) and the base of the mixture vessel (215) is preferably equal to approximately 5 mm and, more preferably in the range between 25 and 250 mm;

g) installation of a tube (223) interlinking the highest possible point of the section (3) with the discharge nozzle (202), without the formation of pockets of stagnating fluid.

The tubular dividing deflector (218') option is particularly suitable for reactions where the diameter of the deflector is less than the diameter of the inspection hole (127/227) of the top cover, because this facilitates the installation/de-installation of the deflector (218'), even when the reactor is already installed.

The other characteristics of the model presented in Figure 3B are equivalent to those of Figure 2B.

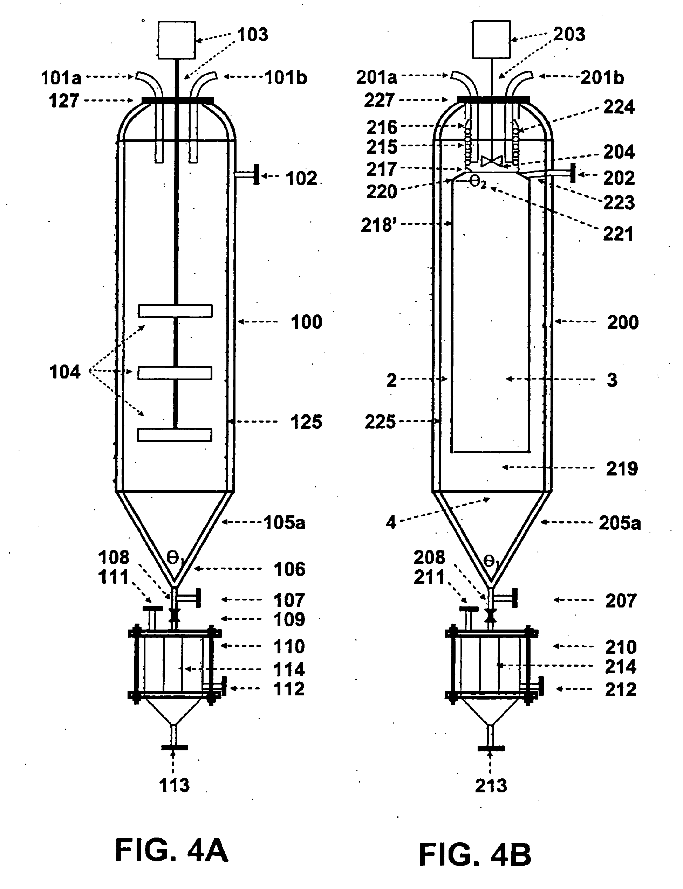

Figure 4A and Figure 4B show a variant of the reactor presented in Figure 3A and Figure 3B, in which the walls of the reactor (100/200) have a heat exchange jacket (125/225) and the internal mixture vessel (section 1) has a coil also for heat exchange (124/224). These reactors allow heat to be added or removed during the reaction. The reactors of Figure 4A and 4B can have applications in reactions in which it is necessary to remove or add heat during the reaction.

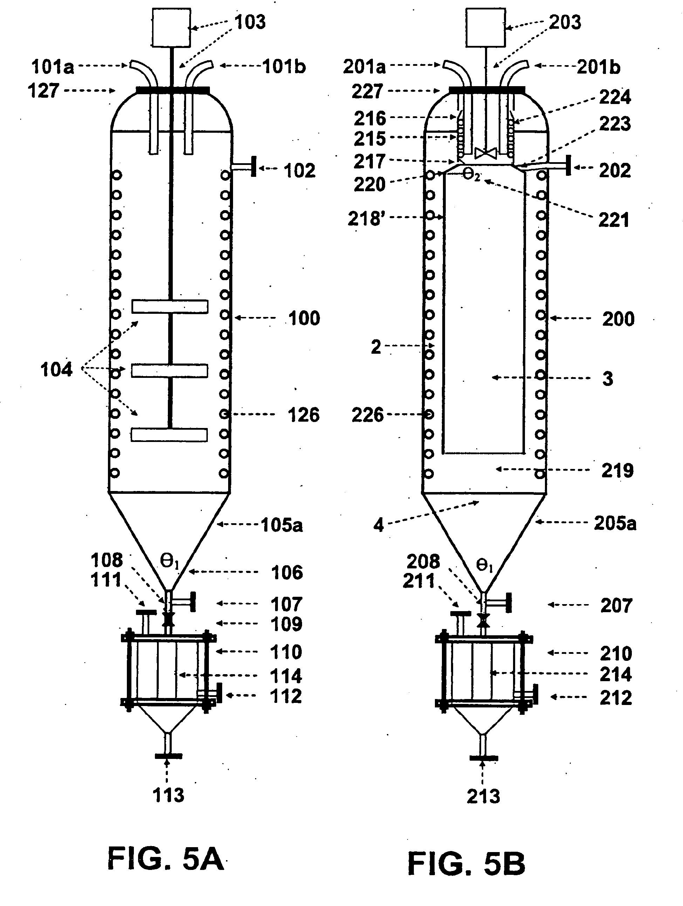

Figure 5A and Figure 5B show a variant of the reactor presented in Figure 4A and Figure 4B, in which the heat exchange jacket is replaced by a coil, also for heat exchange (126/226). The coil can allow heat to be added or removed during the reaction.

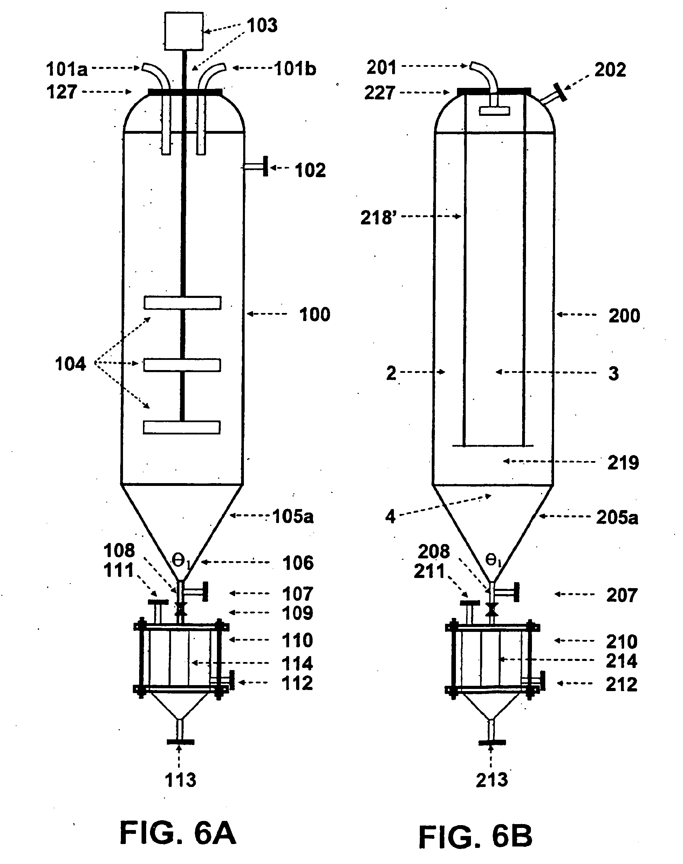

Figure 6A and Figure 6B show a variant of the reactor presented in Figure 3A and Figure 3B, in which the mixture section within the reactor does not exist in the continuous mode operation option. These reactors can have applications in continuous processes in which the charge arrives already mixed (201) or where there is an external mixer.

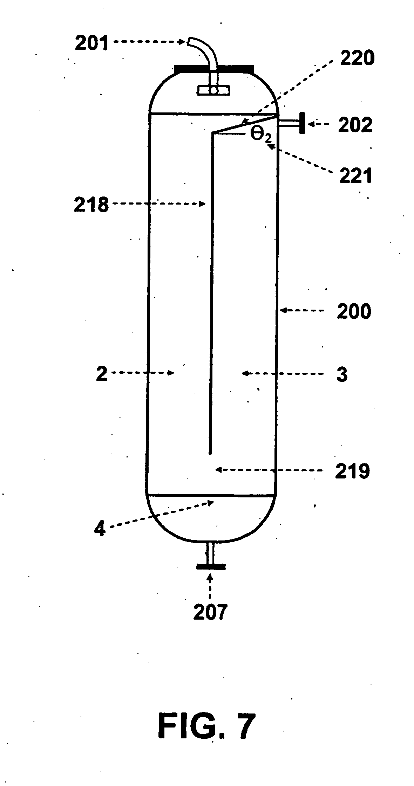

Figure 7 illustrates a further variant of the reactor according to the invention, combining characteristics of the models in Figures 2B and 6B, for operation directly in continuous mode, without worrying about batch/continuous conversion. This variant is indicated for well-established processes and industrial plants of higher capacity. For this reason, batch/tubular conversion is not envisaged, there is no bottom collector and the dividing deflector is of the flat plate type (easier to assemble/disassemble even with the reactor in the vertical position).

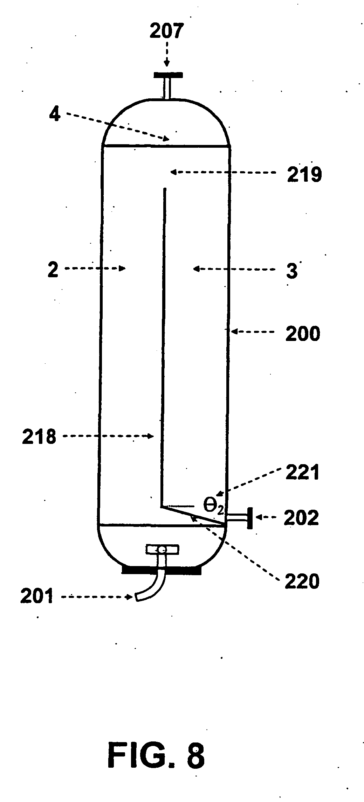

Figure 8 illustrates a variant of the reactor for continuous operation shown in Figure 7, where the separated phase is lighter, and is therefore collected at the top of the reactor. In this situation the flows are inverted, that is, the pre-mixed charge enters via the lower nozzle (201), the separated drops coalesce and leave via the top nozzle (207) and the continuous phase returns to the bottom of the reactor, leaving via the nozzle (202).

Figure 9 illustrates a variant of the reactor for continuous operation shown in Figure 3B, for application in reactions with outgoing currents distributed in four phases: one gas phase, two liquid and one solid. As a function of the presence of the gas phase, this alternative reactor model is designed with an additional section (6) for gas-liquid separation, a demister (229) in the top of this section and a gas discharge nozzle (228) above the demister. The gas-liquid separation section is dimensioned according the normal design criteria for gas-liquid separators, taking account of the critical speed of separation and the minimum separation height. The internal mixture vessel (215), for its part, has its outlet changed in order to discharge the products below the minimum separation height, through the use of ducts, external jacket (230) or any other suitable device. In the bottom of the reactor (205a), the dense liquid phase discharge nozzle (207) is located a little higher, in order to allow decantation of the solid phase directly to the bottom collector (210). This nozzle must be protected from the passage of the solid phase, using a deflector (231a) that limits the access area solely to the ascending flow, with a speed lower than the speed of separation of the solid particles. Optionally, the dense liquid phase discharge can take place via the side nozzle (212) of the collector (210), with this nozzle also being protected by a deflector (231 b) designed with the same deflector criteria (231 a). In order to facilitate the removal of solids accumulated in the collector (210), the vent nozzle (211) can be used for the admission of carrier and/or cleaning fluid. The solids are removed via the nozzle (213).

## Claims

1. A reactor (200), convertible between a batch operation mode and a continuous operation mode, for use in reactions involving two or more phases, at least one of which being a liquid phase, in which the phases are separated without total loss of contact between them, said reactor (200), in the continuous operation mode, comprising:

   (a) a first generally vertical flow section (2) arranged such that a reaction medium flows therealong in a first flow direction;
   (b) a second generally vertical flow section (3) arranged such that the reaction medium flows therealong in a second flow direction generally opposite to said first flow direction; and
   (c) a separation control volume (4) at a junction between the first and second flow sections (2,3), arranged below the first and second flow sections (2, 3) such that a dense phase accumulates therein, wherein the reactor further comprises:
   (d) a flat dividing deflector (218) between first and second flow sections (2, 3).

2. A reactor (200) according to claim 1, wherein the first generally vertical flow section (2), and the second generally vertical flow section (3) are straight vertical flow sections.

3. A reactor (200) according to claim 1 or 2, wherein the reactor (200) is generally cylindrical.

4. A reactor (200) according to any one of the preceding claims, further comprising a nozzle (102,202) for discharging said dense phase.

5. A reactor (200) according to any one of the preceding claims, further comprising means for removing drops of the separated phase from the separation control volume (4).

6. A reactor (200) according to any one of the preceding claims, further comprising a mixture volume section (1) arranged internally at the charge inlet (201a/201b) and provided with an agitation device (203).

7. A reactor according to any one of the preceding claims, further comprising a collector provided with a viewer, section (5).

8. A reactor according to claim 6, wherein the section (1) for the mixture of reagents comprises an internal vessel (215), provided with discharge devices (216) and drainage holes (217).

9. A reactor according to claim 8, wherein the holes (217) have a maximum diameter of 10 mm and are protected by shields arranged in a way that prevents the agitation causing discharge of mixture with low dwell time.

10. A reactor according to any one of the preceding claims, wherein the dimensions of the dividing deflector (218, 218') are such that the speed in the first flow section (2) is ten times lower than the speed with which the dense phase is separated.

11. Use of a reactor according to claim 10, wherein the speed in the first flow section (2) is less than 0.5 m/min.

12. A reactor according to any one of the preceding claims, wherein the dimensions of the dividing deflector (218) are arranged such that the speed in the second flow section (3) is lower than the speed of detachment of the dense phase drops with a diameter equal to the minimum specified for each type of reaction.

13. Use of a reactor according to claim 12, wherein the speed in the second flow section (3) is less than 0.25 m/min.

14. A reactor according to any one of the preceding claims, wherein the dimensioning of the dividing deflector (218) provides for a passage area (219) between the two flow sections (2) and (3) in the range between 20% and 200% of the average area of the two sections.

15. A reactor according to any one of the preceding claims, wherein the dimensioning of the deflector (218), provides for a plate (220) for sealing the top of the second flow section (3) with a slope angle of $\theta_2$ to the horizontal (221) of between 1° and 60°, in the direction of the centre line of the reactor (200).

16. A reactor according to claim 15, wherein the or a mixture vessel (215) of section (1) is located in the side of section (2), between the deflector (218) and the sidewall of the reactor, the deflector (218) is extended as far as the top cover (105a) of the reactor (200) and the sealing plate (220) is dispensed with.

17. A reactor according to any one of claims 8 to 16, wherein the dimensioning of the internal spaces provides a minimum vertical spacing (222) between the sealing plate (220) of section (3) and the base of the mixture vessel (215) equal to 5 mm.

18. A reactor according to any one of claims 8 to 16, wherein the dimensioning of the internal spaces provides a minimum vertical spacing (222) between the sealing plate (220) of section (3) and the base of the mixture vessel (215) in the range between 25 and 250 mm.

19. A reactor according to any one of the preceding claims, wherein the structural system of the reactor (100/200) further comprises devices for heat exchange during the reaction.

20. A reactor according to claim 19, wherein the heat exchange devices comprise an outer jacket for circulation of thermal fluid (125/225) next to the walls of the reactor and a coil (or coils) (124, 224) with the same function inside the or an internal mixture vessel (215) of the or a mixture volume section (1).

21. A reactor according to claim 20, wherein the outer jacket for circulation of thermal fluid (125/225) is replaced by a coil (or coils) (126/226) with the same function.

22. A reactor according to any one of claims 7 to 20, wherein the collector section (5) comprises a collector vessel (110/210), connected to the separation control volume section (4) by a duct (108/208), this collector vessel (110) being provided with vent (111/211) and charge discharge (112, 113/212, 213) nozzles.

23. A reactor according to claim 22 wherein the connection between the collector (110/210) and the separation control volume section (4) is made directly, by means of nozzle-nozzle connections.

**24.** A reactor according to claim 22 wherein the body of the collector vessel (110/210) is comprised of transparent material or is provided with viewers (114/214) of sufficient quantity and size for observation of the separation process and the interface.

**25.** A reactor according to any one of the preceding claims, wherein the reactor (100) is arranged to allow conversion of the reactor (100) arranged to operate in continuous mode to a reactor (200) arranged to operate in batch mode by replacement of internal elements with an agitator comprising a shaft (103) and blades (104).

**26.** A reactor according to any one of the preceding claims, wherein the flat (218) separating divider is used as a separation optimising device.

**27.** Use of a reactor according to any one of the preceding claims, wherein, for reactions in which the separated phase is less dense than the further phase, this is collected in the top of the reactor (200), with the reaction medium entering via a lower nozzle (201), the coalesced drops discharge via a top nozzle (107) and the further continuous phase returns to the bottom of the reactor, discharges via nozzle (202) or equivalent.

**28.** A reactor according to any one of the preceding claims, further comprising a gas-liquid separation section (6), a demister (229) in the top of this section, and a gas discharge nozzle (228) above this demister, for use in the presence of a gas phase.

**29.** A reactor according to claim 28, wherein the outlet of the or a internal mixture vessel (215) is altered to discharge the products below the minimum gas-liquid separation height, through the use of ducts, outer jacket (230) or other equivalent device.

**30.** A reactor according to claim 28 or 29, wherein in the bottom (205b) of the reactor, an outlet nozzle (207) for a dense liquid phase is located high enough to allow decantation of a solid phase directly to the bottom collector (210).

**31.** A reactor according to claim 30, wherein the nozzle (207) is protected from the passage of the solid phase, by use of a deflector (231 a) that limits the access area solely to ascending flow.

**32.** A reactor according to claim 31, wherein the discharge of the dense liquid phase is performed via a side nozzle (212) of the collector (210), with this nozzle also being protected by a deflector (231b) designed with the same criteria as the deflector (231a).

**33.** A reactor according to any one of claims 28 to 32, further comprising a vent nozzle (211) adapted for use for the admission of a carrier and/or cleaning fluid, in order to facilitate the removal of solids that have accumulated in the collector (210).

**34.** A reactor according to according to any one of claims 28 to 33, wherein the removal of solids is performed via a nozzle (213).

**35.** A reactor according to any one of claims 3 to 34, wherein the reactor (200) is arranged such that it simultaneously satisfies the following equations:

$$D \geq 2\sqrt{((\text{area of section } 2 + \text{area of section } 3)/\pi)}$$

$$D \geq 2\sqrt{(Q_{fsep}/v_{gfc}\pi)}$$

where:

$Q_{fsep}$ = volumetric flow of the phase removed from the separation control volume (4); and
$v_{gfc}$ = velocity of separation of the drops from the continuous phase retained within the phase formed following coalescence of the drops separated from the reaction medium.

**36.** Use of a reactor according to claim 35, wherein $v_{gfc}$ is less than 0.25 m/min.

**37.** A combination of the reactor (200) according to any one of claims 1 to 5, and an externally provided mixer for said reactor (200).

**38.** Use of the reactor according to any one of the preceding claims to a reactor in reactions where one of the reagents has a tendency to be absorbed by an insoluble (product) phase in the reaction medium.

**39.** Use of the reactor according to any one of the preceding claims to a reactor in alkylation reactions.

**40.** Use of the reactor according to any one of the preceding claims to a reactor in grease production reactions.

**41.** Use of the reactor according to any one of the preceding claims to a reactor in transesterification reactions of vegetable oils or fats with alcohols.

**42.** Use of the reactor according to any one of the preceding claims to a reactor in biphase reactions or reactions with the formation of two phases of products.

**43.** Use of the reactor according to any one of the preceding claims to a reactor in triphase reactions or reactions with the formation of three phases of products.

**44.** Use of the reactor according to any one of the preceding claims to a reactor in multiphase reactions or reactions with the formation of several phases of products.

**Patentansprüche**

**1.** Reaktor (200), der umschaltbar zwischen einem Chargenbetriebsmodus und einem kontinuierlichen Betriebsmodus ist, zur Verwendung bei Reaktionen, die zwei oder mehr Phasen involvieren, wobei mindestens eine von diesen eine flüssige Phase ist, bei dem die Phasen ohne gänzlichen Verlust des Kontaktes zwischen diesen separiert werden, wobei der Reaktor (200) in dem kontinuierlichen Betriebsmodus umfasst:

(a) einen ersten im Wesentlichen vertikalen Flussabschnitt (2), der derart eingerichtet ist, dass ein Reaktionsmedium entlang diesem in einer ersten Flussrichtung fließt;
(b) einen zweiten im Wesentlichen vertikalen Flussabschnitt (3), der derart eingerichtet ist, dass das Reaktionsmedium entlang diesem in einer zweiten Flussrichtung fließt, die im Wesentlichen entgegengesetzt zu der ersten Flussrichtung ist; und
(c) ein Separationssteuervolumen (4) an einer Kreuzung zwischen dem ersten und zweiten Flussabschnitt (2, 3), das unterhalb des ersten und zweiten Flussabschnitts (2, 3) derart eingerichtet ist, dass eine dichte Phase darin akkumuliert,
wobei der Reaktor weiterhin umfasst:
(d) eine flache Trennwand (218) zwischen dem ersten und dem zweiten Flussabschnitt (2, 3).

**2.** Reaktor (200) gemäß Anspruch 1, wobei der erste im Wesentlichen vertikale Flussabschnitt (2) und der zweite im Wesentlichen vertikale Flussabschnitt (3) gerade vertikale Flussabschnitte sind.

**3.** Reaktor (200) gemäß Anspruch 1 oder 2, wobei der Reaktor (200) im Wesentlichen zylindrisch ist.

**4.** Reaktor (200) gemäß einem der voranstehenden Ansprüche, weiterhin eine Öffnung (102, 202) zum Entladen der dichten Phase umfassend.

**5.** Reaktor (200) gemäß einem der voranstehenden Ansprüche, weiterhin Mittel zum Entfernen von Tropfen der separierten Phase aus dem Separationssteuervolumen (4) umfassend.

**6.** Reaktor (200) gemäß einem der voranstehenden Ansprüche, weiterhin einen Mischungsvolumenabschnitt (1) umfassend, der intern an dem Füllungseinlass (201a/201b) angeordnet ist und mit einer Agitationsvorrichtung (203) bereitgestellt ist.

7. Reaktor gemäß einem der voranstehenden Ansprüche, weiterhin einen Sammler-Abschnitt (5) umfassend, der mit einem Sichtfenster bereitgestellt ist.

8. Reaktor gemäß Anspruch 6, wobei der Abschnitt (1) für die Mischung von Reagenten ein internes Gefäß (215) umfasst, das mit Entladevorrichtungen (216) und Drainagelöchern (217) bereitgestellt ist.

9. Reaktor gemäß Anspruch 8, wobei die Löcher (217) einen maximalen Durchmesser von 10 mm haben und durch Abschirmungen geschützt sind, die auf eine Art und Weise angeordnet sind, die verhindert, dass die Agitation ein Entladen der Mischung mit einer geringen Aufenthaltszeit bewirkt.

10. Reaktor gemäß einem der voranstehenden Ansprüche, wobei die Abmessungen der Trennwand (218, 218') derart sind, dass die Geschwindigkeit in dem ersten Flussabschnitt (2) zehnmal geringer ist, als die Geschwindigkeit, mit welcher die dichte Phase separiert wird.

11. Verwendung eines Reaktors gemäß Anspruch 10, wobei die Geschwindigkeit in dem ersten Flussabschnitt (2) geringer als 0,5 m/min ist.

12. Reaktor gemäß einem der voranstehenden Ansprüche, wobei die Abmessungen der Trennwand (218) derart eingerichtet sind, dass die Geschwindigkeit in dem zweiten Flussabschnitt (3) geringer ist als die Geschwindigkeit des Ablösens der Tropfen der dichten Phase mit einem Durchmesser, der gleich dem Minimum ist, das für jeden Reaktionstyp spezifiziert ist.

13. Verwendung eines Reaktors gemäß Anspruch 12, wobei die Geschwindigkeit in dem zweiten Flussabschnitt (3) geringer als 0,25 m/min ist.

14. Reaktor gemäß einem der voranstehenden Ansprüche, wobei die Abmessungen der Trennwand (218) ein Durchtrittsgebiet (219) zwischen den beiden Flussabschnitten (2) und (3) in dem Bereich zwischen 20% und 200% der durchschnittlichen Fläche der zwei Abschnitte bereitstellt.

15. Reaktor gemäß einem der voranstehenden Ansprüche, wobei die Abmessungen der Wand (218) eine Platte (220) zum Abdichten des Oberteils des zweiten Flussabschnittes (3) mit einem Neigungswinkel $\theta_2$ gegenüber der Horizontalen (221) von zwischen 1° und 60° in der Richtung der Zentrallinie des Reaktors (200) bereitstellen.

16. Reaktor gemäß Anspruch 15, wobei das oder ein Mischungsgefäß (215) des Abschnitts (1) an der Seite des Abschnitts (2) zwischen der Wand (218) und der Seitenwand des Reaktors befindlich ist, wobei sich die Wand (218) so weit wie die Oberteilabdeckung (105a) des Reaktors (200) erstreckt und die Dichtungsplatte (220) entfällt.

17. Reaktor gemäß einem der Ansprüche 8 bis 16, wobei die Abmessungen der internen Räume einen minimalen vertikalen Abstand zwischen der Dichtungsplatte (220) des Abschnitts (3) und der Basis des Mischungsgefäßes (215) bereitstellen, der gleich 5 mm ist.

18. Reaktor gemäß einem der Ansprüche 8 bis 16, wobei die Abmessungen der internen Räume einen minimalen vertikalen Abstand (222) zwischen der Dichtungsplatte (220) des Abschnitts (3) und der Basis des Mischungsgefäßes (215) bereitstellen, der in dem Bereich zwischen 25 und 250 mm liegt.

19. Reaktor gemäß einem der voranstehenden Ansprüche, wobei das Struktursystem des Reaktors (100/200) weiterhin Vorrichtungen zum Wärmeaustausch während der Reaktion umfasst.

20. Reaktor gemäß Anspruch 19, wobei die Wärmeaustauschvorrichtungen eine äußere Ummantelung für eine Zirkulation von Thermalfluid (125/225) in der Nähe der Wandungen des Reaktors und eine Spule (oder Spulen) (124, 224) mit derselben Funktion innerhalb des oder eines internen Mischungsgefäßes (215) von dem oder einem Mischungsvolumenabschnitt (1) umfasst.

21. Reaktor gemäß Anspruch 20, wobei die äußere Ummantelung für eine Zirkulation von Thermalfluid (125/225) durch eine Spule (oder Spulen) (126/226) mit derselben Funktion ersetzt wird.

22. Reaktor gemäß einem der Ansprüche 7 bis 20, wobei der Sammlerabschnitt (5) ein Sammelgefäß (110/210) umfasst, das mit dem Separationssteuervolumenabschnitt (4) mittels eines Kanals (108/208) verbunden ist, wobei dieses Sammelgefäß (110) mit Belüftungs- (111/211) und Füllungsentladungsöffnungen (112, 113/212, 213) bereitgestellt ist.

23. Reaktor gemäß Anspruch 22, wobei die Verbindung zwischen dem Sammler (110/210) und dem Separationssteuervolumensabschnitt (4) direkt mittels Öffnungs-Öffnungs-Verbindungen hergestellt ist.

24. Reaktor gemäß Anspruch 22, wobei der Körper des Sammelgefäßes (110/210) aus transparentem Material besteht oder mit Sichtfenstern (114/214) von ausreichender Menge und Größe zum Beobachten des Separationsprozesses und der Schnittstelle bereitgestellt ist.

25. Reaktor gemäß einem der voranstehenden Ansprüche, wobei der Reaktor (100) eingerichtet ist, um Umwandlung des Reaktors (100), der eingerichtet ist, um in einem kontinuierlichen Modus betrieben zu werden, in einen Reaktor (200), der eingerichtet ist, um in einem Chargenmodus betrieben zu werden, zu ermöglichen, durch Ersetzen von internen Elementen mit einem Agitator, der einen Schaft (103) und Blätter (104) umfasst.

26. Reaktor gemäß einem der voranstehenden Ansprüche, wobei der flache (218) Separationstrenner als ein Separationsoptimierungsgerät verwendet wird.

27. Verwendung eines Reaktors gemäß einem der voranstehenden Ansprüche, wobei, für Reaktionen, in denen die separierte Phase weniger dicht als die weitere Phase ist, diese in dem Oberteil des Reaktors (200) gesammelt wird, wobei das Reaktionsmedium über eine untere Öffnung (201) eintritt, wobei die vereinigten Tropfen über eine obere Öffnung (107) entladen und die weitere kontinuierliche Phase zum Boden des Reaktors zurückkehrt, und über eine Öffnung (202) oder Äquivalentes entlädt.

28. Reaktor gemäß einem der voranstehenden Ansprüche, weiterhin einen Gas-Flüssigkeits-Separationsabschnitt (6), einen Demister (229) in dem Oberteil dieses Abschnitts und eine Gasentladeöffnung (228) oberhalb dieses Demisters umfassend, zur Verwendung in Gegenwart einer Gasphase.

29. Reaktor gemäß Anspruch 28, wobei der Auslass von dem oder eines internen Mischungsgefäßes (215) geändert wird, um die Produkte unterhalb der minimalen Gas-Flüssigkeitsseparationshöhe durch die Verwendung von Kanälen, einer äußeren Umhüllung (230) oder anderen äquivalenten Vorrichtungen zu entladen.

30. Reaktor gemäß Anspruch 28 oder 29, wobei in dem Boden (205b) des Reaktors eine Auslassöffnung (207) für eine dichte Flüssigkeitsphase hoch genug befindlich ist, um eine Dekantierung einer festen Phase direkt in den unteren Sammler (210) hinein zu erlauben.

31. Reaktor gemäß Anspruch 30, wobei die Öffnung (207) gegenüber dem Durchlass der festen Phase und durch Verwendung einer Wand (231a) geschützt ist, welche die Zutrittsfläche lediglich auf aufsteigenden Fluss begrenzt.

32. Reaktor gemäß Anspruch 31, wobei das Entladen der dichten Flüssigkeitsphase über eine Seitenöffnung (212) des Sammlers (210) durchgeführt wird, wobei diese Öffnung auch durch eine Wand (231b) geschützt ist, die mit denselben Kriterien wie die Wand (231a) ausgebildet ist.

33. Reaktor gemäß einem der Ansprüche 28 bis 32, weiterhin eine Belüftungsöffnung (211) umfassend, die für die Verwendung des Zuführens eines Trägers und/oder Reinigungsfluids eingerichtet ist, um das Entfernen von in dem Sammler (210) akkumulierten Festkörpern zu fördern.

34. Reaktor gemäß einem der Ansprüche 28 bis 33, wobei das Entfernen von Festkörpern mittels einer Öffnung (213) durchgeführt wird.

35. Reaktion gemäß einem der Ansprüche 3 bis 34, wobei der Reaktor (200) derart eingerichtet ist, dass er gleichzeitig die folgenden Gleichungen erfüllt:

```
D ≥ 2√((Bereich des Abschnitts 2 + Bereich des
Abschnitts 3)/π)
```

$$D \geq 2\sqrt{(Q_{fsep}/v_{gfc}\pi)}$$

wobei:

$Q_{fsep}$ = Volumenfluss der Phase, die aus dem
Separationssteuervolumen (4) entfernt wird; und
$V_{gfc}$ = Geschwindigkeit der Separation der Tropfen aus der kontinuierlichen Phase, die innerhalb der Phase zurückgehalten wird, die auf die Vereinigung der Tropfen, die von dem Reaktionsmedium separiert sind, folgend ausgebildet wird.

36. Verwendung eines Reaktors gemäß Anspruch 35, wobei $V_{gfc}$ weniger als 0,25 m/min beträgt.

37. Kombination des Reaktors (200) gemäß einem der Ansprüche 1 bis 5 und eines extern bereitgestellten Mischers für den Reaktor (200).

38. Verwendung des Reaktors gemäß einem der voranstehenden Ansprüche als ein Reaktor bei Reaktionen, in denen einer der Reagenten dazu neigt, durch eine nicht lösliche (Produkt)-Phase in dem Reaktionsmedium absorbiert zu werden.

39. Verwendung des Reaktors gemäß einem der voranstehenden Ansprüche als ein Reaktor in Alkylierungsreaktionen.

40. Verwendung des Reaktors gemäß einem der voranstehenden Ansprüche als ein Reaktor bei Schmierfettproduktionsreaktionen.

41. Verwendung des Reaktors gemäß einem der voranstehenden Ansprüche als ein Reaktor bei Umesterungsreaktionen von pflanzlichen Ölen oder Fetten mit Alkohol.

42. Verwendung des Reaktors gemäß einem der voranstehenden Ansprüche als ein Reaktor in Zwei-Phasen-Reaktionen oder Reaktionen mit der Formation von zwei Phasen von Produkten.

43. Verwendung des Reaktors gemäß einem der voranstehenden Ansprüche als ein Reaktor in Drei-Phasen-Reaktionen oder Reaktionen mit der Formation von drei Phasen von Produkten.

44. Verwendung des Reaktors gemäß einem der voranstehenden Ansprüche als ein Reaktor in Multiphasenreaktionen oder Reaktionen mit der Formation von mehreren Phasen von Produkten.

**Revendications**

1. Réacteur (200) convertible entre un mode de fonctionnement discontinu et un mode de fonctionnement continu, destiné à être utilisé dans des réactions auxquelles participent deux ou plus de deux phases, dont au moins une est une phase liquide, dans lequel les phases sont séparées sans perte totale du contact entre elles, ledit réacteur (200), en mode de fonctionnement continu, comportant :

(a) une première zone d'écoulement (2) sensiblement verticale, disposée de manière à ce qu'un milieu réactionnel s'écoule le long de celle-ci, dans un premier sens d'écoulement,
(b) une deuxième zone d'écoulement (3) sensiblement verticale, disposée de manière à ce que le milieu réactionnel s'écoule le long de celle-ci, dans un deuxième sens d'écoulement, généralement opposé audit premier sens d'écoulement, et
(c) un volume de régulation de séparation (4) à la jonction entre les première et deuxième zones d'écoulement (2, 3), disposé sous les première et deuxième zones d'écoulement (2, 3), de manière à ce qu'une phase dense s'y accumule,
dans lequel le réacteur comprend en outre :
(d) un déflecteur diviseur plat (218) entre les première et deuxième zones d'écoulement (2, 3).

2. Réacteur (200) selon la revendication 1, dans lequel la première zone d'écoulement (2) sensiblement verticale et la deuxième zone d'écoulement (3) sensiblement verticale sont des zones d'écoulement verticales rectilignes.

3.  Réacteur (200) selon la revendication 1 ou 2, dans lequel le réacteur (200) est globalement cylindrique.

4.  Réacteur (200) selon l'une quelconque des revendications précédentes, comportant en outre une tubulure (102, 202) pour évacuer ladite phase dense.

5.  Réacteur (200) selon l'une quelconque des revendications précédentes, comportant en outre un moyen pour éliminer les gouttes de la phase séparée provenant du volume de régulation de séparation (4).

6.  Réacteur (200) selon l'une quelconque des revendications précédentes, comportant en outre une zone de volume de mélange (1) disposée à l'intérieur par rapport à l'admission de charge (201a/201b) et pourvue d'un dispositif d'agitation (203).

7.  Réacteur selon l'une quelconque des revendications précédentes, comportant en outre un collecteur pourvu d'un moyen d'observation (5).

8.  Réacteur selon la revendication 6, dans lequel la zone (1) pour le mélange de réactifs comprend une cuve (215) interne, pourvue de dispositifs d'évacuation (216) et de trous d'écoulement (217).

9.  Réacteur selon la revendication 8, dans lequel les trous (217) ont un diamètre maximal de 10 mm et sont protégés par des écrans disposés d'une manière qui empêche l'agitation de provoquer l'évacuation du mélange avec une faible durée de séjour.

10. Réacteur selon l'une quelconque des revendications précédentes, dans lequel les dimensions du déflecteur diviseur (218, 218') sont telles que la vitesse dans la première zone d'écoulement (2) est dix fois plus faible que la vitesse à laquelle est séparée la phase dense.

11. Utilisation d'un réacteur selon la revendication 10, dans lequel la vitesse dans la première zone d'écoulement (2) est inférieure à 0,5 m/min.

12. Réacteur selon l'une quelconque des revendications précédentes, dans lequel les dimensions du déflecteur diviseur (218) sont prévues pour que la vitesse dans la deuxième zone d'écoulement (3) soit plus faible que la vitesse de détachement des gouttes de la phase dense avec un diamètre égal au minimum spécifié pour chaque type de réaction.

13. Utilisation d'un réacteur selon la revendication 12, dans lequel la vitesse dans la deuxième zone d'écoulement (3) est inférieure à 0,25 m/min.

14. Réacteur selon l'une quelconque des revendications précédentes, dans lequel le dimensionnement du déflecteur diviseur (218) prévoit une zone de passage (219) entre les deux zones d'écoulement (2) et (3), qui se situe dans la plage comprise entre 20% et 200% de la superficie moyenne des deux tronçons.

15. Réacteur selon l'une quelconque des revendications précédentes, dans lequel le dimensionnement du déflecteur (218) prévoit une plaque (220) destinée à fermer le haut de la deuxième zone d'écoulement (3) avec un angle d'inclinaison de $\Theta_2$ par rapport à l'horizontale (221) compris entre 1° et 60°, en direction de l'axe médian du réacteur (200).

16. Réacteur selon la revendication 15, dans lequel la ou une cuve de mélange (215) de la zone (1) est située du côté de la zone (2), entre le déflecteur (218) et la paroi latérale du réacteur, le déflecteur (218) est prolongé jusqu'au couvercle (105a) du réacteur (200) et la plaque de fermeture (220) est supprimée.

17. Réacteur selon l'une quelconque des revendications 8 à 16, dans lequel le dimensionnement des espaces internes crée un espacement vertical (222) minimal entre la plaque de fermeture (220) de la zone (3) et la base de la cuve de mélange (215) égal à 5 mm.

18. Réacteur selon l'une quelconque des revendications 8 à 16, dans lequel le dimensionnement des espaces internes crée un espacement vertical (222) minimal entre la plaque de fermeture (220) de la zone (3) et la base de la cuve de mélange (215) qui se situe dans la plage comprise entre 25 et 250 mm.

19. Réacteur selon l'une quelconque des revendications précédentes, dans lequel le système structurel du réacteur (100/200) comporte en outre des dispositifs destinés à l'échange de chaleur pendant la réaction.

20. Réacteur selon la revendication 19, dans lequel les dispositifs d'échange de chaleur comportent une enveloppe extérieure pour la circulation d'un fluide thermique (125/225) à proximité immédiate des parois du réacteur, et un serpentin (ou des serpentins) (124, 224) avec la même fonction à l'intérieur de la ou d'une cuve de mélange (215) interne de la ou d'une zone de volume de mélange (1).

21. Réacteur selon la revendication 20, dans lequel l'enveloppe extérieure pour la circulation du fluide thermique (125/225) est remplacée par un serpentin (ou des serpentins) (126/226) avec la même fonction.

22. Réacteur selon l'une quelconque des revendications 7 à 20, dans lequel la zone collectrice (5) se compose d'une cuve collectrice (110/210) raccordée à la zone de volume de régulation de séparation (4) par une conduite (108/208), cette cuve collectrice (110) étant pourvue d'un évent (111/211) et de tubulures de chargement et d'évacuation (112, 113/212, 213).

23. Réacteur selon la revendication 22, dans lequel le raccord entre le collecteur (110/210) et la zone de volume de régulation de séparation (4) est réalisé directement, au moyen de raccords de tubulure à tubulure.

24. Réacteur selon la revendication 22, dans lequel le corps de la cuve collectrice (110/210) est constitué d'un matériau transparent ou est doté de moyens d'observation (114/214) en quantité et de dimensions suffisantes pour observer le processus de séparation et l'interface.

25. Réacteur selon l'une quelconque des revendications précédentes, dans lequel le réacteur (100) est agencé pour permettre la conversion du réacteur (100), agencé pour fonctionner en mode continu, en un réacteur (200) agencé pour fonctionner un mode discontinu, en remplaçant des éléments internes par un agitateur comprenant un arbre (103) et des ailettes (104).

26. Réacteur selon l'une quelconque des revendications précédentes, dans lequel le diviseur séparateur plat (218) est utilisé comme dispositif d'optimisation de séparation.

27. Utilisation d'un réacteur selon l'une quelconque des revendications précédentes, dans laquelle, pour des réactions où la phase séparée est moins dense que le reste de la phase, celle-ci est collectée en haut du réacteur (200), le milieu réactionnel entrant par une tubulure inférieure (201), les gouttes en coalescence sortant par une tubulure supérieure (107), et le reste de la phase continue retournant au fond du réacteur et étant évacué via la tubulure (202) ou un élément équivalent.

28. Réacteur selon l'une quelconque des revendications précédentes, comprenant en outre une zone de séparation gaz-liquide (6), un dévésiculeur (229) situé en haut de cette zone, et une tubulure d'évacuation de gaz (228) au-dessus de ce dévésiculeur, pour une utilisation en présence d'une phase gazeuse.

29. Réacteur selon la revendication 28, dans lequel la sortie de la ou d'une cuve de mélange (215) interne est modifiée pour évacuer les produits sous la hauteur minimale de séparation gaz-liquide, en utilisant des conduites, l'enveloppe (230) extérieure ou d'autres dispositifs équivalents.

30. Réacteur selon la revendication 28 ou 29, dans lequel, dans le fond (205b) du réacteur, une tubulure de sortie (207) pour une phase liquide dense est placée suffisamment haute pour permettre la décantation d'une phase solide directement vers le collecteur de fond (210).

31. Réacteur selon la revendication 30, dans lequel la tubulure (207) est protégée du passage de la phase solide, en utilisant un déflecteur (231a) qui limite la zone d'accès au seul flux ascendant.

32. Réacteur selon la revendication 31, dans lequel l'évacuation de la phase liquide dense est réalisée par l'intermédiaire d'une tubulure latérale (212) du collecteur (210), cette tubulure étant également protégée par un déflecteur (231b) conçu selon les mêmes critères que le déflecteur (231a).

**33.** Réacteur selon l'une quelconque des revendications 28 à 32, comprenant en outre une tubulure de ventilation (211) adaptée à une utilisation pour l'admission d'un fluide porteur et/ou de nettoyage, en vue de faciliter l'élimination de solides qui se sont accumulés dans le collecteur (210).

**34.** Réacteur selon l'une quelconque des revendications 28 à 33, dans lequel l'élimination de solides est réalisée par l'intermédiaire d'une tubulure (213).

**35.** Réacteur selon l'une quelconque des revendications 3 à 34, dans lequel le réacteur (200) est agencé de manière à satisfaire simultanément aux équations suivantes :

$$D \geq 2\sqrt{(\text{superficie de la zone } 2 + \text{superficie de la zone } 3)/\pi}$$

$$D \geq 2\sqrt{(Q_{fsep}/v_{gfc}x)}$$

où
$Q_{fsep}$ = flux volumétrique de la phase retirée du volume de régulation de séparation (4);
et
$v_{gfc}$ = vitesse de séparation des gouttes de la phase continue retenue dans la phase formée à la suite de la coalescence des gouttes séparées du milieu réactionnel.

**36.** Utilisation d'un réacteur selon la revendication 35, dans lequel $v_{gfc}$ est inférieure à 0,25 m/min.

**37.** Combinaison du réacteur (200) selon l'une quelconque des revendications 1 à 5 et d'un mélangeur prévu de façon externe pour ledit réacteur (200).

**38.** Utilisation du réacteur selon l'une quelconque des revendications précédentes pour un réacteur, dans des réactions où l'un des réactifs a une tendance à être absorbé par une phase (de produit) insoluble dans le milieu réactionnel.

**39.** Utilisation du réacteur selon l'une quelconque des revendications précédentes pour un réacteur, dans des réactions d'alkylation.

**40.** Utilisation du réacteur selon l'une quelconque des revendications précédentes pour un réacteur, dans des réactions de production de graisse.

**41.** Utilisation du réacteur selon l'une quelconque des revendications précédentes pour un réacteur, dans des réactions de transestérification d'huiles végétales ou de graisses avec des alcools.

**42.** Utilisation du réacteur selon l'une quelconque des revendications précédentes pour un réacteur, dans des réactions biphasiques ou des réactions avec formation de deux phases de produits.

**43.** Utilisation du réacteur selon l'une quelconque des revendications précédentes pour un réacteur, dans des réactions triphasiques ou des réactions avec formation de trois phases de produits.

**44.** Utilisation du réacteur selon l'une quelconque des revendications précédentes pour un réacteur, dans des réactions polyphasiques ou des réactions avec formation de plusieurs phases de produits.

FIG. 1

**FIG. 2A**          **FIG. 2B**

**FIG. 3A**          **FIG. 3B**

**FIG. 4A**

**FIG. 4B**

**FIG. 5A**          **FIG. 5B**

FIG. 6A          FIG. 6B

**FIG. 7**

**FIG. 8**

# FIG. 9

**EP 1 889 659 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6080373 A